# EUROPÄISCHE PATENTANMELDUNG

(11) **EP 1 788 292 A2**
(43) Veröffentlichungstag der Anmeldung: **23.05.2007**
(21) Anmeldenummer: 06023858.1
(22) Anmeldetag: 17.11.2006
(51) Int. Cl.: F16L 19/10, F16L 33/22

(54) **Schlauchanschluss**

(30) Priorität: 22.11.2005 DE 102005056826
(71) Anmelder: GARDENA Manufacturing GmbH, 89079 Ulm (DE)
(72) Erfinder: Renner, Thomas, 89079 Ulm (DE)
(74) Vertreter: Patentanwälte Ruff, Wilhelm, Beier, Dauster & Partner

(57) **Zusammenfassung**

Die Erfindung betrifft einen Schlauchanschluss (1) für einen Schlauch (2), mit einem Rohransatz (3), der für ein Aufstecken des Schlauchs (2) vorgesehen ist und an dem eine über den Schlauch (2) stülpbare Außenhülse (4) anbringbar ist, die für die Ausübung einer Betätigungskraft auf zumindest eine zwischen der Außenhülse und dem Rohransatz angeordnete Klemmeinrichtung (5) vorgesehen ist. Erfindungsgemäß ist die Klemmeinrichtung (5) getrennt vom Rohransatz (3) ausgeführt.

## Beschreibung

Die Erfindung betrifft einen Schlauchanschluss für einen Schlauch, mit einem Rohransatz, der für ein Aufstecken des Schlauchs vorgesehen ist und an dem eine über den Schlauch stülpbare Außenhülse anbringbar ist, die für die Ausübung einer Betätigungskraft auf zumindest eine zwischen der Außenhülse und dem Rohransatz angeordnete Klemmeinrichtung vorgesehen ist.

Aus der DE 195 03 772 A1 ist ein Schlauchanschluss bekannt, bei dem ein Schlauchende eines Schlauches auf einen Rohransatz aufgesteckt wird. Der Schlauch wird mittels einer Schraubhülse, die dem Rohransatz zugeordnete Greifelemente auslenkt, auf den Rohransatz gepresst. Die Schraubhülse umgibt eine Verlängerungshülse, die den Schlauch noch ein wesentliches Stück hinter dem Klemmbereich der Greifelemente umgibt und abstützt. Die Verlängerungshülse weist auch eine trichterförmig gestaltete, konische Betätigungsfläche auf, die für das Anpressen der Greifelemente auf eine Außenfläche des Schlauches vorgesehen ist.

Die Greifelemente sind stirnseitig und einstückig an einem dem Rohransatz zugeordneten Rohrstutzen angebracht und ragen in axialer Richtung entgegen einer Aufsteckrichtung des Schlauches auf den Rohransatz ab. Bei längerer Lagerung des montierten Schlauchanschlusses ohne aufgesteckten Schlauch und bei montierter Verlängerungshülse werden die Greifelemente radial nach innen gedrängt und erschweren dann ein Aufstecken des Schlauches auf den Rohransatz. Zur Schlauchmontage müssen in diesem Fall zunächst die Greifelemente aufgebogen werden, was einen unerwünschten Aufwand darstellt und mit dem Risiko einer Beschädigung der Greifelemente sowie mit einer Verletzungsgefahr für den Benutzer verbunden ist. Beschädigungen an den Greifelementen können zu einer unzureichenden Klemmung des Schlauches und damit zu Undichtigkeiten des Schlauchanschlusses führen. Außerdem kann es bei der Demontage eines lange Zeit an einen Schlauch montierten Schlauchanschlusses zu Schwierigkeiten kommen, da die Greifelemente in dem elastischen Schlauch verkrallt sind und durch die lange Deformationsdauer nur eine geringe Tendenz zur Freigabe des Schlauches aufweisen.

Die Aufgabe der Erfindung besteht darin, einen Schlauchanschluss zu schaffen, der eine verbesserte Bedienung ermöglicht und eine erhöhte Betriebssicherheit verwirklicht.

Diese Aufgabe wird gemäß einem ersten Aspekt der Erfindung durch einen Schlauchanschluss der eingangs genannten Art gelöst, bei dem die Klemmeinrichtung getrennt vom Rohransatz ausgeführt ist. Durch die separate Gestaltung der Klemmeinrichtung kann bei der Montage des Schlauchanschlusses ein erleichtertes Aufstecken des Schlauches auf den Rohransatz gewährleistet werden. Im Gegensatz zu dem bekannten Schlauchanschluss, bei dem die Greifelemente entgegen einer Aufsteckrichtung des Schlauches vom Rohrstutzen abragen und somit ein Aufstecken des Schlauches auf den Rohransatz behindern können, ist bei einer separaten Gestaltung der Klemmeinrichtung ein Aufstecken des Schlauches erleichtert, da die Klemmeinrichtung während des Aufsteckens nicht im Bereich des Rohransatzes angeordnet sein muss. Auch eine Demontage des Schlauches vom Schlauchanschluss wird durch die separate Gestaltung der Klemmeinrichtung erleichtert, da die Klemmeinrichtung relativ zum Rohransatz verdreht und/oder verschoben und bei geeigneter Gestaltung auch entfernt werden kann, wodurch ein Lösen des Schlauches vom Rohransatz erleichtert wird. Die Klemmeinrichtung kann bei der Demontage des Schlauchanschlusses vom Rohransatz entfernt werden, wodurch ein Abziehen des Schlauches vom Rohransatz erleichtert wird. Anschließend kann die Klemmeinrichtung von dem dann deutlich flexibleren Schlauch abgenommen werden, wodurch eine einfachere Handhabung der Schlauchkupplung sichergestellt ist.

Gemäß einem weiteren Aspekt der Erfindung ist vorgesehen, dass die Klemmeinrichtung Klemmkrallen aufweist, die derart zwischen der Außenhülse und dem Rohransatz angeordnet sind, dass bei Aufbringung einer Betätigungskraft eine Schwenkbewegung der Klemmkrallen mit einer linearen Bewegungskomponente vorgesehen ist, die entgegen einer Aufsteckrichtung des Schlauchs auf den Rohransatz gerichtet ist. Die Klemmkrallen sind für die Ausübung einer Klemmkraft auf den Schlauch vorgesehen und können durch die Außenhülse aus einer Neutralstellung in eine Klemmstellung gebracht werden. Die Überführung der Klemmkralle aus der Neutralstellung in die Klemmstellung wird bevorzugt durch eine Schwenkbewegung erreicht, die durch die Außenhülse bewirkt wird. Bei der Schwenkbewegung werden die Klemmkrallen um Schwenkachsen verschwenkt, die bevorzugt in einer orthogonal zu einer Mittellängsachse des Schlauchanschlusses ausgerichteten Ebene liegen und die vorteilhaft tangential an einem konzentrisch zur Mittellängsachse angeordneten Kreis ausgerichtet sind. Bei dieser Schwenkbewegung tritt durch die Ausrichtung der Klemmkrallen und die Lage der zugeordneten Schwenkachsen eine anteilige lineare Bewegungskomponente auf, die einer Aufsteckrichtung des Schlauchs auf den Rohransatz entgegengerichtet ist. Entscheidend ist, dass durch die Auslenkung der Klemmkrallen mit der linearen Bewegungskomponente entgegen der Aufsteckrichtung eine Selbsthemmung der Klemmkrallen bei Ausübung von Zugkräften auf den Schlauch auftreten kann. Dadurch ist bereits mit einer geringen, von der Außenhülse auf die Klemmkrallen ausgeübten Klemmkraft eine sichere Verriegelung des Schlauches an dem Rohrstutzen gewährleistet, so dass die von einem Bediener bei der Montage des Schlauchanschlusses auf die Außenhülse aufzubringenden Kräfte auf einem niedrigen Niveau gehalten werden können und eine komfortable Bedienung sichergestellt ist.

In weiterer Ausgestaltung der Erfindung ist vorgesehen, dass sich die Klemmkrallen in einer Neutralstellung der Klemmeinrichtung im Wesentlichen in achsialer Richtung erstrecken und an einem Klemmring angebracht sind, der einen zumindest abschnittsweise ringförmig um den Schlauch umlaufenden Grundkörper aufweist. Damit kann eine einfache Montage der Klemmeinrichtung auf den Schlauch sichergestellt werden, da die Klemmkrallen an dem Klemmring zusammengefasst sind, so dass sie nicht einzeln montiert werden müssen. Die Anbringung der Klemmkrallen an dem Grundkörper des Klemmrings ermöglicht die einfache Handhabung einer Vielzahl von Klemmkrallen, so dass eine zuverlässige und flüssigkeitsdichte Klemmung des Schlauches an dem Rohransatz gewährleistet werden. In der Neutralstellung begrenzen die Klemmkrallen einen freien Innendurchmesser, der zumindest einem Außendurchmesser des Schlauches entspricht, so dass der Klemmring leicht auf den Schlauch aufgeschoben werden kann.

In weiterer Ausgestaltung der Erfindung ist vorgesehen, dass dem Rohransatz eine Ablenkeinrichtung zugeordnet ist, an der der Klemmring mit freien Endbereichen der Klemmkrallen anliegt und dass der Grundkörper für eine Wirkverbindung mit der Außenhülse vorgesehen ist. Die Ablenkeinrichtung ermöglicht die Auslenkung der Klemmkrallen in Richtung des auf den Rohransatz aufgeschobenen Schlauches und dient somit der Umlenkung der von der Außenhülse insbesondere in axialer Richtung ausgeübten Betätigungskraft in eine im Wesentlichen radial nach innen ausgerichtete Klemmkraft, die hinsichtlich eines Kraftschlusses zwischen dem Rohransatz und dem Schlauch zu einer Verstärkung einer durch eine Elastizität des Schlauches hervorgerufenen Normalkraft und damit zur Erhöhung der Reibung zwischen Schlauch und Rohransatz beiträgt.

In weiterer Ausgestaltung der Erfindung ist vorgesehen, dass die Klemmkrallen in einem dem Grundkörper abgewandten Endbereich zahnförmig gestaltet sind, um eine formschlüssige Wirkverbindung mit dem Schlauch zu gewährleisten. Durch die Schwenkbewegung der Klemmkrallen werden diese aus der Neutralstellung, in der die Klemmkrallen im Wesentlichen parallel zur Mittellängsachse des Schlauchanschlusses ausgerichtet sind, in eine abgewinkelte Position gegenüber der Mittellängsachse und damit gegenüber dem Schlauch gebracht. Um eine hohe Flächenpressung zwischen Klemmkralle, Schlauch und Rohransatz zu gewährleisten, sind die Klemmkrallen endseitig zahnförmig gestaltet und treten damit im Wesentlichen in eine Art Linienberührung mit dem Schlauch. Durch die zahnförmige, bei einer bevorzugten Ausführungsform keilförmige Gestaltung der Klemmkrallen wird der elastische Schlauch abschnittsweise komprimiert, so dass eine Erhöhung der vom Schlauch auf den Rohransatz ausgeübten Normalkräfte und der dadurch hervorgerufenen Reibungskräfte zwischen Schlauch und Rohransatz auftritt. Außerdem wölbt sich der Schlauch bedingt durch die Normalkräfte vor hinter dem durch die Klemmkrallen bestimmten Eingriffsbereich auf, da er zumindest teilweise elastisch deformiert wird und das Schlauchmaterial aus der Deformationszone ausweicht. Durch die Aufwölbung ist bei Aufbringung einer Zugkraft auf den Schlauch sichergestellt, dass zum Abziehen des Schlauches vom Rohransatz nicht nur die Reibung zwischen Schlauch und Rohransatz überwunden werden muss, sondern zudem der aufgewölbte Bereich soweit deformiert werden muss, dass er zwischen den Klemmkrallen und dem Rohransatz hindurch gleiten kann. Dies bedingt eine zusätzliche Deformationskraft, so dass eine größere Zugkraft notwendig ist, um den Schlauch vom Schlauchanschluss abzuziehen.

In weiterer Ausgestaltung der Erfindung ist vorgesehen, dass die Ablenkeinrichtung mit einer dem Klemmring zugewandten, zumindest abschnittsweise konisch geformten Leitfläche versehen ist, die für eine Ablenkung der Klemmkrallen radial nach innen in Richtung des Rohransatzes vorgesehen ist, um eine von der Außenhülse ausübbare axiale Betätigungskraft in eine radiale Klemmkraft zur Fixierung des Schlauchs an dem Rohransatz umsetzen zu können. Durch die konische geformte Leitfläche kann eine kompakte Gestaltung des Schlauchanschlusses verwirklicht werden. Die Axialbewegung der Außenhülse wird durch die Wirkverbindung zwischen Außenflächen der Klemmkrallen und der konisch geformten Leitfläche in eine zumindest teilweise radial nach innen gerichtete Klemmkraft umgesetzt, die zu einer Auslenkung der Klemmkrallen und damit zur Klemmung des Schlauches auf dem Rohransatz führt.

In weiterer Ausgestaltung der Erfindung ist vorgesehen, dass ein freier Innendurchmesser des Klemmrings im Bereich der Klemmkrallen konisch nach innen gewandte Flächenabschnitte aufweist, die ein Aufstecken des Klemmrings auf den Schlauch erleichtern. Um bei der Montage des Schlauchanschlusses bereits bei einem geringen axialen Weg der Außenhülse eine Klemmkraft der Klemmkrallen auf den Schlauch ausüben zu können, ist der freie Innendurchmesser des Klemmrings in der Neutralstellung im Bereich der Klemmkrallen so bemessen, dass allenfalls ein geringer Spalt zwischen den Klemmkrallen und dem Schlauch vorliegt. Bei einer bevorzugten Ausführungsform der Erfindung ist vorgesehen, dass der freie Innendurchmesser des Klemmrings im Bereich der Klemmkrallen kleiner als der Außendurchmesser des Schlauches ist, so dass bei Aufschieben des Klemmrings auf den Schlauch eine Reibungskraft auftritt, die ein unerwünschtes Verschieben des Klemmrings auf dem Schlauch vermindert. Durch die konischen Flächenabschnitte wird ein Aufschieben des Klemmrings auf den Schlauch erleichtert, so dass eine komfortable Montage des Schlauchanschlusses gewährleistet ist.

In weiterer Ausgestaltung der Erfindung ist vorgesehen, dass die Klemmkrallen einstückig mittels elastischer Festkörpergelenke schwenkbeweglich an dem Grundkörper angebracht sind. Damit kann eine fertigungsfreundliche und leicht zu montierende Ausführung des Klemmrings verwirklicht werden. Die Festkörpergelenke, die insbesondere als Filmscharniere ausgeführt werden können, sind als verjüngte Bereich zwischen den Klemmkrallen und dem Grundkörper verwirklicht und erlauben eine Schwenkbewegung der Klemmkrallen gegenüber dem Grundkörper, ohne dass eine plastische Deformation des Gelenkbereichs auftritt. Die Festkörpergelenke sind bei einer bevorzugten Ausführungsform des Klemmrings so angeordnet, dass sie in einer orthogonal zur Mittellängsachse des Klemmrings ausgerichteten Ebene liegen und zumindest nahezu tangential zu einem Innendurchmesser des ringförmigen Grundkörpers angeordnet sind. Ein derartig gestalteter Klemmring kann insbesondere im Kunststoffspritzgussverfahren kostengünstig und präzise hergestellt werden.

In weiterer Ausgestaltung der Erfindung ist vorgesehen, dass die Außenhülse drehbeweglich unverlierbar auf den Klemmring aufgeschnappt ist, wobei zumindest eine zumindest abschnittsweise umlaufende Druckfläche für eine axiale Kraftübertragung zwischen Außenhülse und Klemmring vorgesehen ist. Die Kopplung der Außenhülse mit dem Klemmring mittels einer Schnappverbindung ermöglicht eine intuitiv und komfortabel durchzuführende Montage des Schlauchanschlusses, da nur eine geringe Zahl von Einzelteilen miteinander verbunden werden muss. Zudem kann durch die Kopplung der Außenhülse mit dem Klemmring ein selbsttätiges Zurückziehen des Klemmrings vom Rohransatz bewirkt werden, da die Außenhülse bei der Demontage entgegen der Aufsteckrichtung des Schlauches vom Rohransatz entfernt wird und den gekoppelten Klemmring mittransportiert. Die Drehbeweglichkeit zwischen der Außenhülse und dem Klemmring stellt sicher, dass bei einer als Schraubhülse ausgeführten Außenhülse während des Klemmvorgangs keine Relativbewegung zwischen Klemmkrallen und Schlauch auftritt, die zu einer Beschädigung des Schlauches führen könnte.

In weiterer Ausgestaltung der Erfindung ist vorgesehen, dass der Grundkörper des Klemmrings derart über die Außenhülse hinausragt, dass er als Knickschutz für den Schlauch dienen kann. Damit kommt dem Klemmring eine Doppelfunktion zu, er dient nicht nur der Ausübung von Klemmkräften auf den Schlauch, sondern auch zur Abstützung des Schlauches in einem Bereich unmittelbar hinter dem aus im Wesentlichen formstabilen Bauteilen aufgebauten Schlauchanschluss. Bei einer bevorzugten Ausführungsform der Erfindung ist der Klemmring aus Polyoxymethylen (POM) hergestellt, das eine hohe Steifigkeit und dennoch günstige Elastizitätseigenschaften aufweist.

In weiterer Ausgestaltung der Erfindung ist vorgesehen, dass der Klemmring einstückig mit der Außenhülse ausgeführt ist. Damit kann ein besonders einfach und kostengünstig herzustellender Schlauchanschluss verwirklicht werden, der insbesondere für robuste Schläuche mit einer unempfindlichen Außenfläche eingesetzt werden kann. Zur Vermeidung von Beschädigungen der Schlauchaußenfläche können die einstückig an der Außenhülse angebrachten Klemmkrallen endseitig verrundet ausgeführt werden, um eine Kerbwirkung bei der Montage der Außenhülse zu reduzieren.

Weitere Vorteile und Merkmale der Erfindung ergeben sich aus den Ansprüchen sowie der nachfolgenden Beschreibung eines bevorzugten Ausführungsbeispiels, das anhand der Figuren dargestellt ist. Dabei zeigt:
- Fig. 1: eine ebene Schnittdarstellung eines Schlauchanschlusses,
- Fig. 2: eine Vorderansicht eines Klemmrings,
- Fig. 3: eine ebene Schnittdarstellung einer weiteren Ausführungsform eines Schlauchanschlusses.

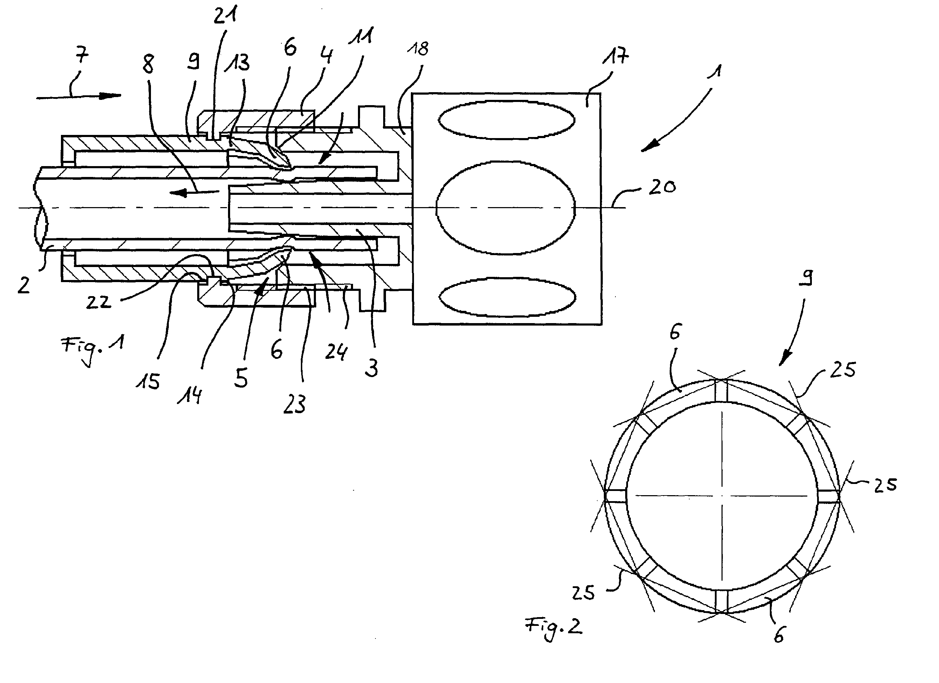

Ein in der Fig. 1 dargestellter Schlauchanschluss 1 ist für die Verbindung eines aus flexiblem Material hergestellten Schlauches 2 mit einem nicht dargestellten Kupplungsstück vorgesehen. Dazu weist der Schlauchanschluss 1 eine nicht näher dargestellte Kupplungsbuchse auf, die in einem Kupplungskörper 18 integriert ist. Die Kupplungsbuchse ist von einem Betätigungsring 17 umgeben, der schiebebeweglich an dem Kupplungskörper 18 angebracht ist und der eine Betätigung der Kupplungsbuchse ermöglicht. Für die Aufnahme des Schlauches 2 ist an dem Kupplungskörper 18 ein im Wesentlichen zylindrisch ausgeführter Rohransatz 3 vorgesehen, der in einem freien Endbereich konisch ausgeführt ist, um ein Aufstecken des Schlauches 2 in einer Aufsteckrichtung 7 zu ermöglichen. Der Schlauch 2 wird beim Aufstecken auf den Rohransatz 3 aufgeweitet und übt durch seine Elastizität eine Normalkraft auf den Rohransatz 3 aus, die eine Haftreibungskraft hervorruft. Da bei Benutzung des Schlauchs 2, der insbesondere als Gartenschlauch zur Leitung von Wasser vorgesehen sein kann, im Inneren des Schlauches 2 ein Überdruck gegenüber einer äußeren Umgebung herrscht, wird der Schlauch 2 durch diesen Überdruck ausgedehnt und kann vom Rohransatz 3 abrutschen.

Um dies zu vermeiden, ist eine Klemmeinrichtung 5 vorgesehen, die zwischen dem Kupplungskörper 18 und einer auf den Kupplungskörper in Aufsteckrichtung 7 aufschraubbaren Außenhülse 4 aufgenommen ist. Die Klemmeinrichtung 5 weist einen Klemmring 19 auf, der aus einem ringförmigen Grundkörper 9 und schwenkbeweglich daran angebrachten Klemmkrallen 6 aufgebaut ist. Der Grundkörper 9 ist als zylindrische Hülse ausgeführt und erstreckt sich derart längs einer Mittellängsachse 20, so dass er bei montiertem Schlauchanschluss 1 gegen die Aufsteckrichtung 7 über die Außenhülse 4 hinausragt und als Knickschutz für den Schlauch 2 dienen kann. Die Außenhülse 4 ist auf den Grundkörper 9 formschlüssig aufgeschnappt, dazu weist die Außenhülse 4 einen radial nach innen ragenden, umlaufenden Bund 21 auf, während an dem Grundkörper 9 eine umlaufende Nut 22 vorgesehen ist. Die in radialer Richtung erstreckten Seitenwände der Nut 22 dienen für die Übertragung von Druckkräften von der Außenhülse 4 auf den Grundkörper 9 in und gegen die Aufsteckrichtung 7 und werden daher als Druckflächen 14, 15 bezeichnet. Die Außenhülse 4 ist mit einem Innengewinde 23 versehen, das in ein an dem Grundkörper 9 vorgesehenes Außengewinde 24 eingreifen kann und das die Übersetzung eines von einem Bediener auf die Außenhülse 4 ausgeübten Drehmomentes in eine Druckkraft in oder gegen die Aufsteckrichtung 7 ermöglicht.

Die Klemmkrallen 6 sind an einer Stirnseite des Grundkörpers 9 mit Festkörpergelenken 13 schwenkbeweglich angebracht und weisen in einem freien, dem Grundkörper 9 abgewandten Endbereich eine keilförmige Geometrie auf. In der dargestellten Funktionsposition werden die Klemmkrallen 6 durch eine von der Außenhülse 4 in Aufsteckrichtung 7 ausgeübte Druckkraft auf eine dem Kupplungskörper 18 zugeordnete umlaufende, konisch geformte Leitfläche 11 gepresst und dadurch radial nach innen ausgelenkt. Durch diese Auslenkung üben die Klemmkrallen 6 eine zumindest im Wesentlichen radial nach innen gerichtete Druckkraft aus, die als Normalkraft auf den Schlauch 2 und damit auf den Rohransatz 3 wirkt und somit zu einer Erhöhung der Reibung zwischen Schlauch 2 und Rohransatz 3 führt. Zudem wird in einem von den Klemmkrallen 6 bestimmten, umlaufenden Bereich des Schlauches 2 eine Ausdehnung des Schlauches 2 verhindert, so dass ein Überdruck im Schlauch 2 nicht einem Abrutschen vom Rohransatz 3 führt.

Weiterhin findet durch die Klemmkrallen 6 eine umlaufende lokale Deformation des Schlauches 2 statt, die mit einer Aufwölbung des verdrängten Schlauchmaterials vor und hinter dem Eingriffsbereich der Klemmkrallen 6 einhergeht. Durch diese umlaufenden Aufwölbungen wird ein Abziehen des Schlauches 2 durch Ausübung von entgegengesetzten Zugkräften auf den Schlauchanschluss1 und den Schlauch 2 erschwert. Da die Klemmkrallen 6 an einer dem Kupplungskörper 18 zugewandten Stirnseite des Grundkörpers 9 angebracht sind und bei einem Aufschrauben der Außenhülse 4 auf den Kupplungskörper 18 auf die konisch ausgeführte Leitfläche 11 des Rohrabschnittes 18 gepresst werden, führen sie eine Schwenkbewegung durch, die für eine der Klemmkrallen exemplarisch mit dem Richtungspfeil 26 gekennzeichnet ist. Diese Schwenkbewegung erfolgt für jede der Klemmkrallen 6 in einer anderen Schwenkachse 25, wie in der Fig. 2 näher dargestellt. Alle Schwenkachsen 25 sind in einer Ebene angeordnet, die orthogonal zur Mittellängsachse 20 ausgerichtet ist. Da alle Klemmkrallen 6 in rotationssymmetrischer Weise an der Stirnseite des Grundkörpers 9 angebracht sind, kann die Lage der einzelnen Schwenkachsen zusätzlich durch einen konzentrisch zur Mittellängsachse 20 angeordneten Kreis beschrieben werden, den alle Schwenkachsen tangieren und der einen Durchmesser aufweist, der etwas größer als der freie Innendurchmesser des Grundkörpers 9 gewählt ist.

Die Schwenkbewegung der Klemmkrallen 6 ist somit zumindest hinsichtlich einer linearen Bewegungskomponente 8 der Aufsteckrichtung 7 entgegengerichtet, so dass die Ausübung von entgegengesetzten Zugkräften auf den Schlauchanschluss1 und den Schlauch 2 zu einem Drehmoment an den Klemmkrallen 6 führt, das eine weitere Schwenkbewegung der Klemmkrallen 6 in Klemmrichtung und ebenfalls mit der linearen Bewegungskomponente 8 entgegen der Aufsteckrichtung 7 hervorruft, so dass die Klemmkraft auf den Schlauch 2 erhöht wird und sich die Klemmkrallen 6 noch tiefer in den Schlauch 2 eingraben. Damit wird eine Kraftverstärkung in der Art einer Selbsthemmung bewirkt, so dass die zum Abziehen des Schlauchs 2 notwendige Zugkraft im Extremfall bis zum Versagen des Schlauchmaterials gesteigert werden muss, um den Schlauchanschluss 1 vom Schlauch 2 zu trennen.

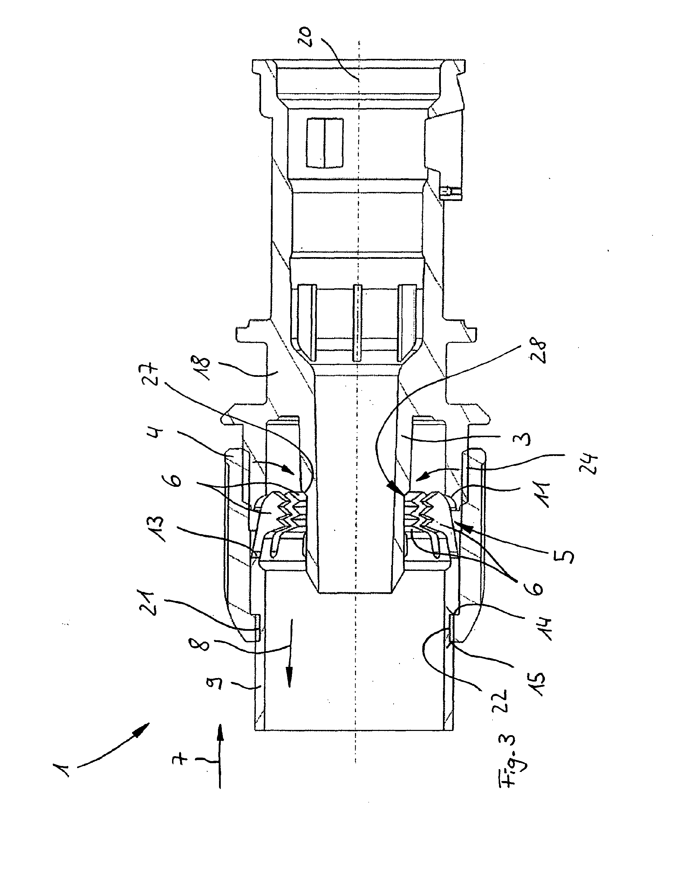

Bei der in Fig. 3 dargestellten Ausführungsform der Erfindung sind für funktionsgleiche Merkmale die gleichen Bezugszeichen wie bei den Fig. 1 und 2 gewählt. Im Unterschied zum Schlauchanschluss gemäß der Fig. 1 weist der Rohransatz 3 bei der Variante gemäß Fig. 3 zwei unterschiedliche Außendurchmesser auf. Dabei ist ein erster, dem Kupplungskörper 18 abgewandter und am freien Ende des Rohransatzes 3 vorgesehener Außendurchmesser in etwa auf den Innendurchmesser des aufzusteckenden Schlauchs abgestimmt, so dass dieser ohne Mühe aufgesteckt werden kann. An einer Stufe, die als Dichtkante 27 bezeichnet wird, schließt sich ein zweiter Außendurchmesser an, der sich bis zum Kupplungskörper 18 erstreckt. Die Dichtkante 27 überwindet den Durchmesserunterschied zwischen dem ersten und dem zweiten Außendurchmesser mit einer konischen Geometrie, so dass an einem Übergang zwischen dem ersten Außendurchmesser und der Dichtkante 27 eine Innenecke 28 ausgebildet wird.

Die Klemmkrallen 6 sind bezogen auf den Kupplungskörper 18 derart in Richtung der Mittellängsachse 20 angeordnet, dass sie in unmittelbarer Nachbarschaft der Dichtkante 27 zu liegen kommen und bei aufgestecktem Schlauch eine Stirnfläche des Schlauchs gegen die Dichtkante 27 pressen. Dadurch kann eine besonders vorteilhafte Dichtwirkung zwischen Rohransatz 3 und Schlauch erzielt werden. Diese Dichtwirkung wird insbesondere durch die kombinierte rotatorische und translatorische Bewegung der Klemmkrallen 6 hervorgerufen, die beim Aufschrauben der Außenhülse 4 auf den Kupplungskörper 18 auftritt. Dabei wird der Schlauch sowohl in radialer Richtung nach innen komprimiert als auch axial in Richtung des Kupplungskörpers 18 verschoben. Durch die konische Gestaltung der Dichtkante 27 und die korrespondierend konisch ausgeführte Stirnfläche der Klemmkralle 6 wird der Schlauch zuverlässig in die Innenecke 28 gedrängt und kann wegen des Durchmessersprungs zwischen dem ersten und dem zweiten Außendurchmesser des Rohransatzes 3 nicht ausweichen. Eine Höhe der Dichtkante beträgt zumindest 20%, bevorzugt zumindest 35%, besonders bevorzugt zumindest 50% einer Wandstärke eines auf den Rohransatz 3 aufzusteckenden Schlauchs. Es kann auch vorgesehen sein, den Schlauch über die Dichtkante 27 hinweg auf den Rohransatz 3 aufzuschieben, so dass beim Aufschrauben der Außenhülse 4 auf den Kupplungskörper 18 die Klemmkrallen 6 einen Schlauchabschnitt in die Innenecke 28 drängen, wodurch ebenfalls eine vorteilhafte Dichtwirkung erzielt werden kann.

## Patentansprüche

1. Schlauchanschluss (1) für einen Schlauch (2), mit einem Rohransatz (3), der für ein Aufstecken des Schlauchs (2) vorgesehen ist und an dem eine über den Schlauch (2) stülpbare Außenhülse (4) anbringbar ist, die für die Ausübung einer Betätigungskraft auf zumindest eine zwischen der Außenhülse (4) und dem Rohransatz (3) angeordnete Klemmeinrichtung (5) vorgesehen ist, **dadurch gekennzeichnet, dass** die Klemmeinrichtung (5) getrennt vom Rohransatz (3) ausgeführt ist.

2. Schlauchanschluss nach dem Oberbegriff des Anspruchs 1 oder nach Anspruch 1, **dadurch gekennzeichnet, dass** die Klemmeinrichtung (5) Klemmkrallen (6) aufweist, die derart zwischen der Außenhülse (4) und dem Rohransatz (3) angeordnet sind, dass bei Aufbringung einer Betätigungskraft eine Schwenkbewegung der Klemmkrallen (6) mit einer Bewegungskomponente (8) vorgesehen ist, die entgegen einer Aufsteckrichtung (7) des Schlauchs (2) auf den Rohransatz (3) gerichtet ist.

3. Schlauchanschluss nach Anspruch 2, **dadurch gekennzeichnet, dass** sich die Klemmkrallen (6) in einer Neutralstellung der Klemmeinrichtung (5) im Wesentlichen in achsialer Richtung erstrecken und an einem Klemmring angebracht sind, der einen zumindest abschnittsweise ringförmig um den Schlauch (2) umlaufenden Grundkörper (9) aufweist.

4. Schlauchanschluss nach Anspruch 3, **dadurch gekennzeichnet, dass** dem Rohransatz (3) eine Ablenkeinrichtung (11) zugeordnet ist, an der der Klemmring mit freien Endbereichen der Klemmkrallen (6) anliegt und dass der Grundkörper (9) für eine Wirkverbindung mit der Außenhülse (4) vorgesehen ist.

5. Schlauchanschluss nach Anspruch 4, **dadurch gekennzeichnet, dass** die Klemmkrallen (6) in einem dem Grundkörper (9) abgewandten Endbereich zahnförmig, insbesondere keilförmig, gestaltet sind, um eine formschlüssige Wirkverbindung mit dem Schlauch (2) zu gewährleisten.

6. Schlauchanschluss nach Anspruch 4, **dadurch gekennzeichnet, dass** die Ablenkeinrichtung (11) mit einer dem Klemmring zugewandten, zumindest abschnittsweise konisch geformten Leitfläche versehen ist, die für eine Ablenkung der Klemmkrallen (6) radial nach innen in Richtung des Rohransatzes (3) vorgesehen ist, um eine von der Außenhülse (4) ausübbare achsiale Betätigungskraft in eine radiale Klemmkraft zur Fixierung des Schlauchs (2) an dem Rohransatz (3) umsetzen zu können.

7. Schlauchanschluss nach Anspruch 6, **dadurch gekennzeichnet, dass** ein freier Innendurchmesser des Klemmrings im Bereich der Klemmkrallen (6) konisch nach innen gewandte Flächenabschnitte (12) aufweist, die ein Aufstecken des Klemmrings auf den Schlauch (2) erleichtern.

8. Schlauchanschluss nach Anspruch 5, **dadurch gekennzeichnet, dass** die Klemmkrallen (6) einstückig mittels elastischer Festkörpergelenke (13) schwenkbeweglich an dem Grundkörper (9) angebracht sind.

9. Schlauchanschluss nach Anspruch 2, **dadurch gekennzeichnet, dass** die Außenhülse (4) drehbeweglich unverlierbar auf den Klemmring aufgeschnappt ist, wobei zumindest eine zumindest abschnittsweise umlaufende Druckfläche (14, 15) für eine axiale Kraftübertragung zwischen Außenhülse (4) und Klemmring vorgesehen ist.

10. Schlauchanschluss nach Anspruch 9, **dadurch gekennzeichnet, dass** der Grundkörper (9) des Klemmrings derart über die Außenhülse (4) hinausragt, dass er als Knickschutz für den Schlauch (4) dienen kann.

11. Schlauchanschluss nach Anspruch 8, **dadurch gekennzeichnet, dass** der Klemmring einstückig mit der Außenhülse (4) ausgeführt ist.
